# EUROPEAN PATENT APPLICATION

(11) **EP 3 517 926 A1**
(43) Date of publication of application: **31.07.2019**
(21) Application number: 17852858.4
(22) Date of filing: 08.09.2017
(51) Int. Cl.: G01M 17/02

(54) **DEVICE FOR EVALUATING TIRE ROLLING RESISTANCE**

(30) Priority: 20.09.2016 JP 2016183372
(71) Applicant: Kabushiki Kaisha Kobe Seiko Sho (Kobe Steel, Ltd.), Kobe-shi, Hyogo 651-8585 (JP)
(72) Inventor: OKADA Toru, Hyogo 651-2271 (JP)
(74) Representative: TBK
(86) International application number: PCT/JP2017/032484
(87) International publication number: WO 2018/056081

(57) **Abstract**

Provided is a device for evaluating rolling resistance that makes it possible to apply excitation force to a tire and evaluate the rolling resistance of the tire even when a load roll is not excited again after pressing the load roll against a tire. The device (10) for evaluating the rolling resistance of a tire (2) is provided with: a load roll (44) having a surface that simulates a road surface on which a tire (2) travels; a load sensor (38); a position sensor (37); a phase difference calculation unit (48) that calculates the phase difference of variation in the load and variation in the position of the surface of the load roll (44); and a rolling resistance evaluation unit (49) that compares with the phase difference calculated by the phase difference calculation unit (48) and evaluates the rolling resistance of the tire to be evaluated. The load roll (44) is an eccentric roll having an eccentric axis of rotation, a polygonal roll having a polygonal cross section, or an ovular roll having an ovular cross section. The load roll (44) is pressed against the tire (2) at a predetermined load, has a fixed position, and rotates together with rotation of the tire (2).

## Description

### Technical Field

The present invention relates to a device for evaluating tire rolling resistance.

### Background Art

One of important measurement items in measurement of properties and performance of a tire of a truck, a car, or some other vehicle is the rolling resistance of the tire.

The rolling resistance of a tire is a force in the tangential direction that occurs between the tire and a ground when the tire is rolled on the ground. In a tire testing machine, the rolling resistance of a test tire is measured as a force in the tangential direction that occurs between the tire and a counterpart surface (e.g., the surface of a load drum) that rotates being in contact with the tire. That is, when a radial force (load Fz) having a certain magnitude is applied between the tire and the counterpart surface, a rolling resistance Fx corresponding to the load Fz occurs. In this manner, a relationship between the load Fz and the rolling resistance Fx is measured.

Such a rolling resistance measuring method is prescribed in JIS D 4234 (Method for measuring the rolling resistance of tires for cars, trucks, and buses, 2009) as a method using a drum tire running testing machine.

For example, an instrument disclosed in Patent Document 1 is known as a rolling resistance testing machine that conforms to the JIS standard. The rolling resistance measuring instrument disclosed in Patent Document 1 is configured in such a manner that a tire is brought into contact with, that is, pressed against, the outer circumferential surface of a cylindrical load drum (i.e., running drum) and a force and torque (moment) acting in each of the x, y, and z directions is measured by a multi-component force detector for a spindle that supports the tire via a bearing. This instrument of Patent Document 1 is configured so as to measure a relationship between the axial load Fz on the tire and the rolling resistance Fx with a correction on interference between the component forces.

However, it takes a very long time for the rolling resistance measuring instrument of Patent Document 1 to measure rolling resistances of all tires manufactured because it takes considerable time to measure a rolling resistance of one tire.

To reduce the time to measure a rolling resistance of a tire, Patent Document 2 discloses a technique for predicting a rolling resistance coefficient using a tire uniformity tester for testing the uniformity of a tire. It is known that the rolling resistance occurs due to energy loss that is caused by deformation of a tire rubber member during rolling of the tire and is highly correlated with the attenuation property of the tire rubber member. In view of this, in Patent Document 2, a method for predicting a rolling resistance coefficient by measuring an attenuation property that appears as a phase difference between the drum displacement and the reaction force while exciting the tire using a drum that is provided in the tire uniformity tester was devised. This method is characterized in that a phase difference corresponding to an attenuation property of each tire is measured in a uniformity measuring process for testing all tires and abnormal tires are sorted out whose rolling resistance coefficient values are out of a standard range. To sort out abnormal tires, a phase of a reference tire whose rolling resistance coefficient is within the reference range is calculated in advance by the method of Patent Document 2. A measured phase of a tire manufactured is compared with the phase of the reference tire and the tire manufactured is judged defective if the difference is larger than an allowable value.

### Citation List

### Patent Literature

Patent Document 1: JP-A-2003-4598
Patent Document 2: JP-A-2015-232545

### Summary of Invention

### Technical Problem

However, in the method of Patent Document 2 in which a tire is excited by moving the load drum forward and backward, it is necessary to excite the load drum after pressing it against the tire.

The present invention has been made to solve the above problem, and an object of the invention is therefore to provide a device for evaluating tire rolling resistance capable of evaluating a rolling resistance of a tire by applying exciting force to the tire without exciting a load drum after pressing the load drum against the tire.

### Solution to Problem

A device for evaluating rolling resistance according to the invention includes: a load roll having a surface that simulates a road surface on which a tire is to travel; a load sensor configured to detect a load acting on the tire in a state where the surface of the load roll is in contact with the tire; a position sensor configured to detect a position of the surface of the load roll; a phase difference calculation unit configured to calculate a phase difference between a variation of the load and a variation of the position on the surface of the load roll on the basis of signals from the load sensor and the position sensor; and a rolling resistance evaluation unit configured to evaluate a rolling resistance of the tire as an evaluation target by comparing the phase difference calculated for the tire as the evaluation target by the phase difference calculation unit with the phase difference calculated for a reference tire by the phase difference calculation unit. The load roll is an eccentric roll whose rotation axis is eccentric, a polygonal roll having a polygonal shape in cross section, or an elongated circle roll having an elongated circle shape in cross section and the load roll is configured to be pressed against the tire with a prescribed load, fixed in position, and rotated with the rotation of the tire.

In the invention, the load roll is an eccentric roll whose rotation axis is eccentric, a polygonal roll having a polygonal shape in cross section, or an elongated circle roll having an elongated circle shape in cross section and the load roll is configured to be pressed against the tire with the prescribed load, fixed in position, and rotated with the rotation of the tire. Since the load roll is thus rotated with the rotation of the tire, a rolling resistance of the tire can be evaluated by applying exciting force to the tire without exciting the load roll after pressing the load roll against the tire.

It is preferable that the largest dimension of the distance between the rotation axis and the surface of the load roll be smaller than half of the outer diameter of the tire, which means that the load roll is smaller than the tire. This makes it possible to reduce fatigue damage of members constituting the load roll and vibration of the entire device.

The load roll may be attached to a drum shaft, supported by a load cell, of a running drum of a tire uniformity tester via a fixing member capable of moving around the drum shaft and a signal from the load cell may be input to the phase difference calculation unit so that the load cell is used as the load sensor.

In the above configuration, in adding a tire rolling resistance evaluation function to the tire uniformity tester, a variable load acting on the tire can be measured without newly providing a load sensor. Furthermore, a motive power source for the running drum of the tire uniformity tester can be used in pressing the load roll against the tire with a prescribed load. Still further, since the position of the running drum of the tire uniformity tester is fixed when the running drum is pressed against the tire, it is not necessary to newly provide a mechanism for fixing the position of the load roll.

It is preferable that two of the load rolls be disposed side by side and configured to rotate at the same phase. By disposing the two of the load rolls side by side, the contact state of the tire can be made closer to its actual ground contact state and the curvature of deformation of the tire can be made smaller. Furthermore, the same load can be applied to the tire by rotating the two of the load rolls at the same phase.

### Advantageous effects of Invention

In the invention, the load roll is an eccentric roll whose rotation axis is eccentric, a polygonal roll having a polygonal shape in cross section, or an elongated circle roll having an elongated circle shape in cross section and when the load roll is pressed against a tire with a prescribed load, the load roll is fixed in position and rotated with the rotation of the tire. Since the load roll is thus rotated with the rotation of the tire, a rolling resistance of the tire can be evaluated by applying exciting force to the tire without exciting the load roll after pressing the load roll against the tire.

### Brief Description of Drawings

FIG. 1 is a schematic diagram of a device for evaluating rolling resistance and a tire uniformity tester according to an embodiment of the present invention.
FIG. 2 is a sectional view in which the device for evaluating rolling resistance is viewed from the side.
FIG. 3 is a plan view of the device for evaluating rolling resistance.
FIG. 4 is a front view of the device for evaluating rolling resistance.
FIG. 5A is a plan sectional view of a load roll illustrating a state that the load roll is pressed against a tire when the phase is 0°, FIG. 5B is a plan sectional view of the load roll illustrating a state that the load roll is pressed against the tire when the phase is 90°, FIG. 5C is a plan sectional view of the load roll illustrating a state that the load roll is pressed against the tire when the phase is 180°, and FIG. 5D is a plan sectional view of the load roll illustrating a state that the load roll is pressed against the tire when the phase is 270°.
FIG. 6 is a block diagram illustrating an electrical configuration of the device for evaluating tire rolling resistance.
FIG. 7 is a graph schematically illustrating a phase difference between the displacement of a load drum and the load amplitude.
FIG. 8 is a plan sectional view of a modified load roll.
FIG. 9 is a plan sectional view of another modified load roll.
FIG. 10 is a front view of a housing of a device for evaluating rolling resistance according to the second embodiment.
FIG. 11 is a plan view of the housing of the device for evaluating rolling resistance according to the second embodiment.
FIG. 12 is a plan sectional view of the load rolls of the device for evaluating rolling resistance according to the second embodiment illustrating a state that the load rolls are pressed against a tire.
FIG. 13 is a plan view of a device for evaluating rolling resistance according to the third embodiment applied to a tire uniformity tester.
FIG. 14 is a side view of the device for evaluating rolling resistance according to the third embodiment applied to the tire uniformity tester.

### Description of Embodiments

Embodiments of the present invention are hereinafter described with reference to the accompanying drawings.

### <Embodiment 1>

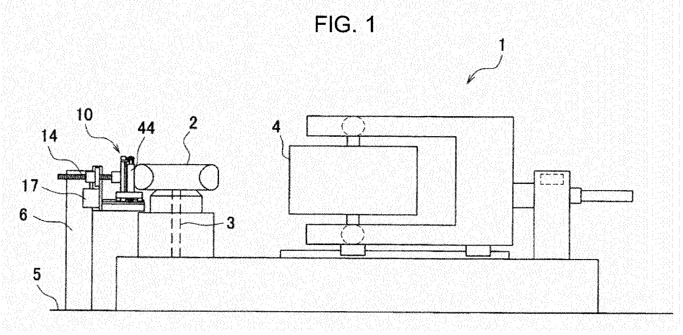

As shown in FIG. 1, a device for evaluating rolling resistance 10 (hereinafter referred to simply as an "evaluation device") according to this embodiment is installed in a tire uniformity tester (TUM) 1 for performing a tire uniformity test (JIS D 4233) in which the uniformity of a tire 2 in the circumferential direction is tested. Since the evaluation device 10 is installed separately from, rather than integrated with, the tire uniformity tester 1, a load roll 44 (described later) is installed separately from a running drum 4 of the tire uniformity tester 1. The evaluation device 10 is installed on the opposite side of the tire 2 to the tire uniformity tester 1. The tire 2 is annular shaped and is rotatably supported by a tire shaft 3 that extends in the vertical direction. There are no particular limitations on the place at which the evaluation device 10 is installed except that the evaluation device 10 should be installed at such a place as not to interfere with the tire uniformity tester 1, in particular, its running drum 4.

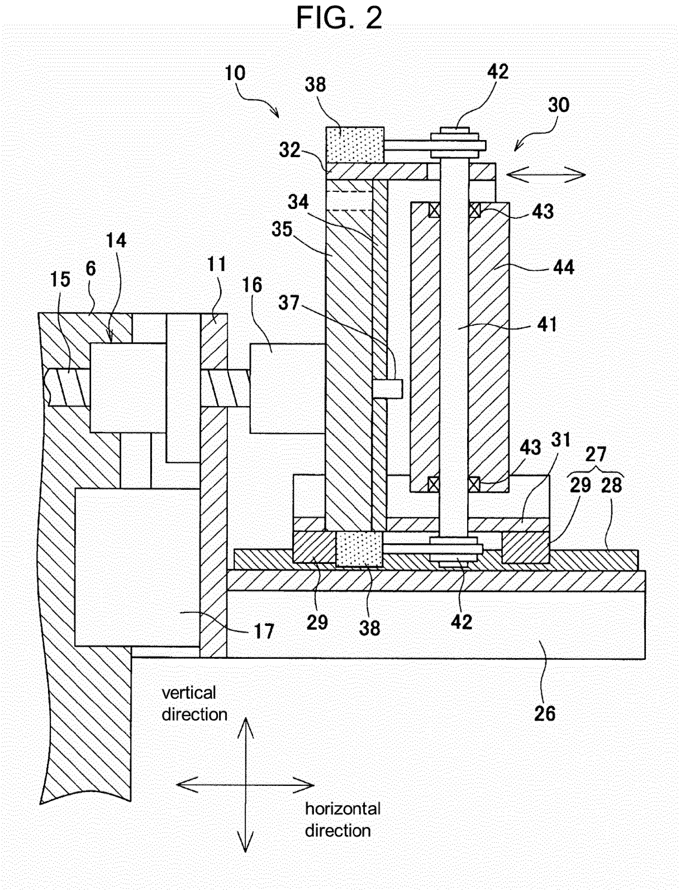

The evaluation device 10 evaluates a rolling resistance of the tire 2 by bringing, into contact with the tire 2, the load roll 44 (see FIG. 2) having a surface that simulates a road surface on which a tire is to travel. The evaluation device 10 is fixed to a fixing member 6 that is installed on a base 5 so as to extend in the vertical direction.

A ball screw 14 for moving a housing 30 (described later) and a servo motor 17 for controlling the ball screw 14 are attached to the fixing member 6. The load roll 44 is pressed against the tire 2 via the housing 30 or separated from the tire 2 by causing a screw shaft 15 of the ball screw 14 to advance or retreat with respect to the tire 2. The position of the load roll 44 is fixed by servo-locking the servo motor 17 at such a position that the load roll 44 is pressed against the tire 2 and receives a prescribed reaction force from the tire 2.

The evaluation device 10 is equipped with an erected wall 11 fixed to the fixing member 6 so as to extend in the vertical direction (i.e., top-bottom direction in FIG. 2), a base frame 26 extending in a horizontal direction (i.e., left-right direction in FIG. 2) that is perpendicular to the erected wall 11, and a housing 30 configured to be moved in the horizontal direction on the base frame 26.

The screw shaft 15 of the ball screw 14 extends penetrating through the erected wall 11 and an end portion 16 of the ball screw 14 is connected to a projected wall portion 35 of the housing 30.

Rails 28 of a pair of linear guides 27 extending straightly on the base frame 26 from the end on the erected wall 11 side to the end on the tire 2 side (i.e., the right-hand end in FIG. 2) are fixed to the top surface of the base frame 26.

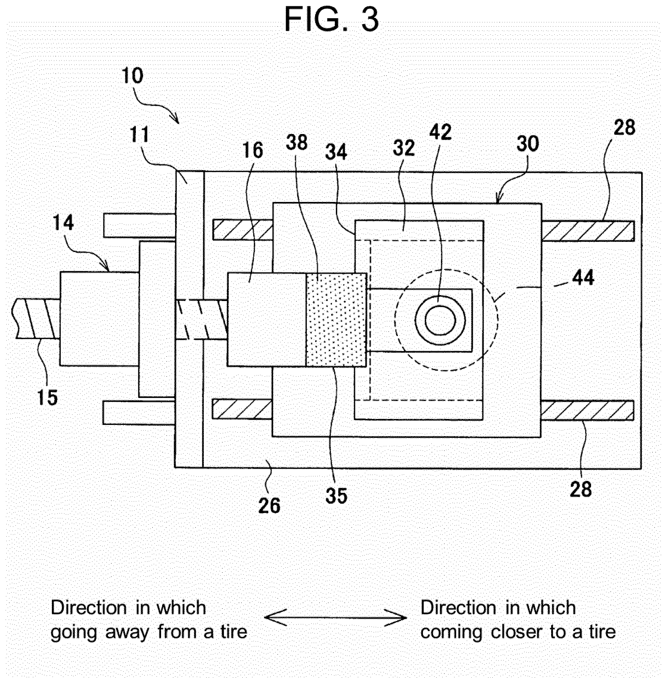

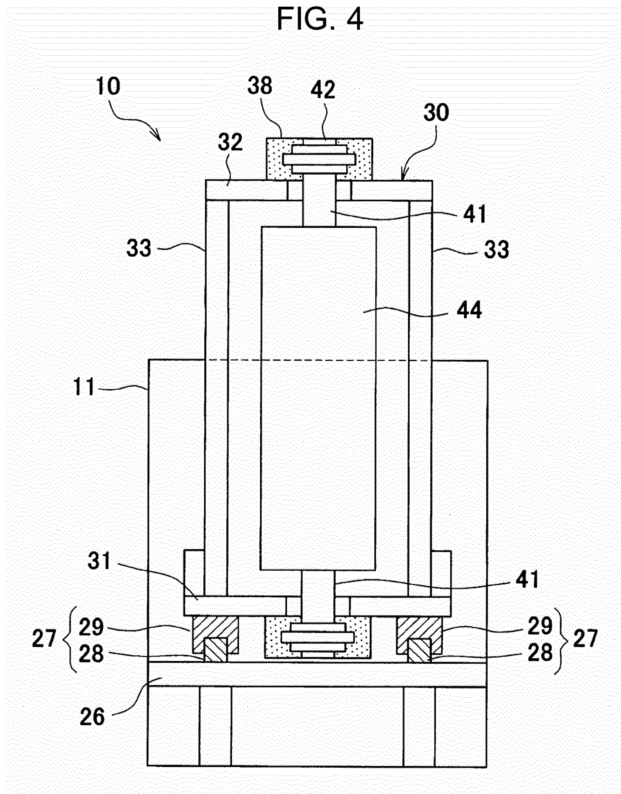

The housing 30 supports the load roll 44 rotatably and reciprocates the load roll 44 along the linear guides 27 in a direction in which the load roll 44 comes closer to the tire 2 (i.e., rightward direction in FIG. 3) and in a direction in which the load roll 44 goes away from the tire 2 (i.e., leftward direction in FIG. 3). As seen by also referring to FIG. 4, the housing 30 has a vertically long box shape that is open on the front side (i.e., viewer's side in FIG. 4) and is equipped with a bottom wall 31, a top wall 32, side walls 33, a back wall 34 (see FIG. 3), and the projected wall portion 35.

The bottom surface of the bottom wall 31 is provided with sliders 29 that slide along the rails 28 of the linear guides 27. Since the housing 30 is attached to the base frame 26 via the linear guides 27, the housing 30, and thus load roll 44, can be prevented from tilting.

Load cells 38 that are load sensors for detecting a load acting on the tire 2 in a state where the surface of the load roll 44 is in contact with the tire 2 are installed on the bottom surface of the bottom wall 31 and the top surface of the top wall 32, respectively. A top roll fixing member 42 fixing the top end of a roll shaft 41 is attached to the upper load cell 38, and a bottom roll fixing member 42 fixing the bottom end of the roll shaft 41 is attached to the lower load cell 38. The roll shaft 41 supports the load roll 44 rotatably via bearings 43. With the above configuration, when the load roll 44 is pressed against the tread surface of the tire 2, a load is transmitted to the load cells 38 via the roll shaft 41 and the roll fixing members 42 and the load acting on the tire 2 is measured by the load cells 38. Since all of the load acting on the load roll 44 acts on the load cells 38, the load can be measured accurately.

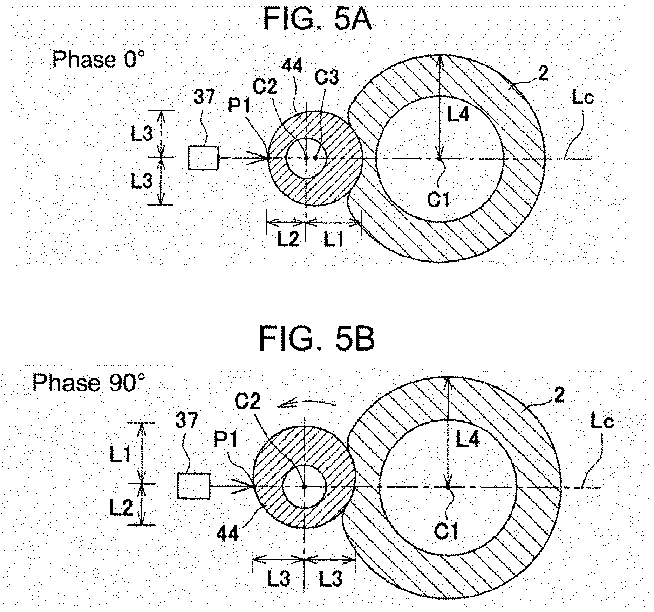

A position sensor 37 for detecting a position of the surface of the load roll 44 is disposed on the side of the projected wall portion 35 of the housing 30. The position sensor 37 (see FIG. 5A to FIG. 5D) detects a surface position PI, located on the side opposite to the tire 2, of the load roll 44 on a line Lc that connects the center C1 of the tire 2 and the rotation axis C2 of the load roll 44. A variation amount of the surface position P1 with respect to a prescribed reference point continues to be detected as the load roll 44 is rotated, and the variation amount of the surface position P1 is regarded as a deformation amount of the tire 2. The surface position of the load roll 44 to be detected by the position sensor 37 is not limited to the surface position PI, and may be any position on the surface of the load roll 44. Although in the embodiment a non-contact laser displacement meter is used as the position sensor 37, the position sensor 37 may be a non-contact eddy current displacement meter or a contact displacement meter.

The load roll 44 is a cylindrical member whose axis extends in the vertical direction, and the surface of the load roll 44 serves as a simulated load surface for tire testing. FIG. 5A is plan sectional views showing relationships between the load roll 44 and the tire 2 in a state where the load roll 44 is pressed against the tire 2. In the embodiment, an eccentric roll whose rotation axis is eccentric is used as the load roll 44. The load roll 44 is pressed against the tire 2 with a prescribed load by the ball screw 14 and the servo motor 17. The position of the load roll 44 is fixed by servo-locking of the servo motor 17, and the load roll 44 is rotated with the rotation of the tire 2.

The single load roll 44 has a rotation axis C2 that is eccentric to its true center axis C3. In the load roll 44, an outer radius of a surface position that is most distant from the rotation axis C2 is a longest radius L1 and an outer radius of a surface position that is closest to the rotation axis C2 is a shortest radius L2. An outer radius between the rotation axis C2 and a surface position whose length is middle between the longest radius L1 and the shortest radius L2 is an intermediate radius L3. The largest dimension L1 of the distance between the surface of the load roll 44 and the rotation axis C2 is smaller than half (L4) of the outer diameter of the tire 2. In the embodiment, since the eccentricity of the rotation axis C2 with respect to the true center axis C3 is 5 mm, the excitation amplitude for the tire 2 (i.e., difference between L1 and L2) is equal to 10 mm. As a result, assuming that the tire 2 has a common stiffness value 200 N/mm, a variable load of 2,000 N can be applied to the tire 2. However, the eccentricity of the load roll 44 is not limited to 5 mm.

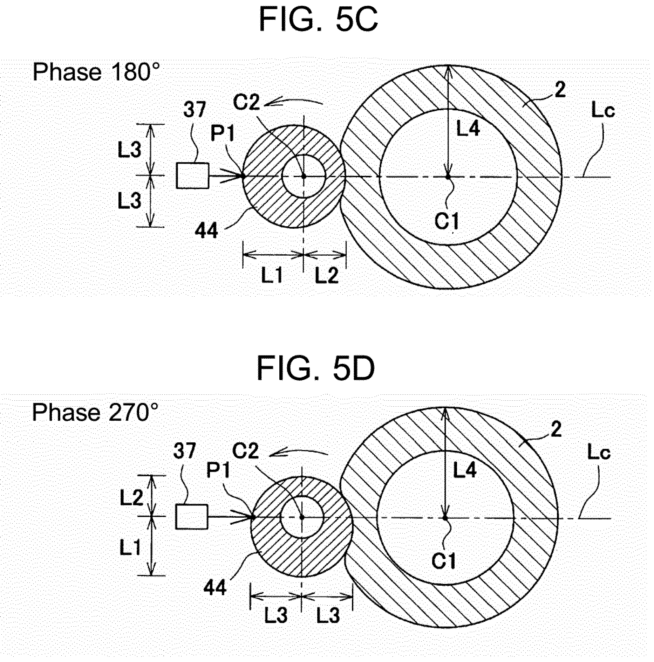

Next, a rotation operation of the load roll 44 for applying exciting force to the tire 2 is described. As shown in FIG. 5A, when the phase of the load roll 44 is 0°, the surface portion, having the longest radius L1, of the load roll 44 is pressed against the tire 2. When the load roll 44 is rotated counterclockwise in the figure, as shown in FIG. 5B the phase of the load roll 44 becomes 90° and the surface portion having the intermediate radius L3 is pressed against the tire 2. When the load roll 44 is rotated further counterclockwise in the figure, as shown in FIG. 5C the phase of the load roll 44 becomes 180° and the surface portion having the shortest radius L2 is pressed against the tire 2. When the load roll 44 is rotated from this state counterclockwise in the figure, as shown in FIG. 5D the phase of the load roll 44 becomes 270° and the surface portion having the intermediate radius L3 is pressed against the tire 2. The load acting on the tire 2 can be varied by the above rotation operation of the load roll 44.

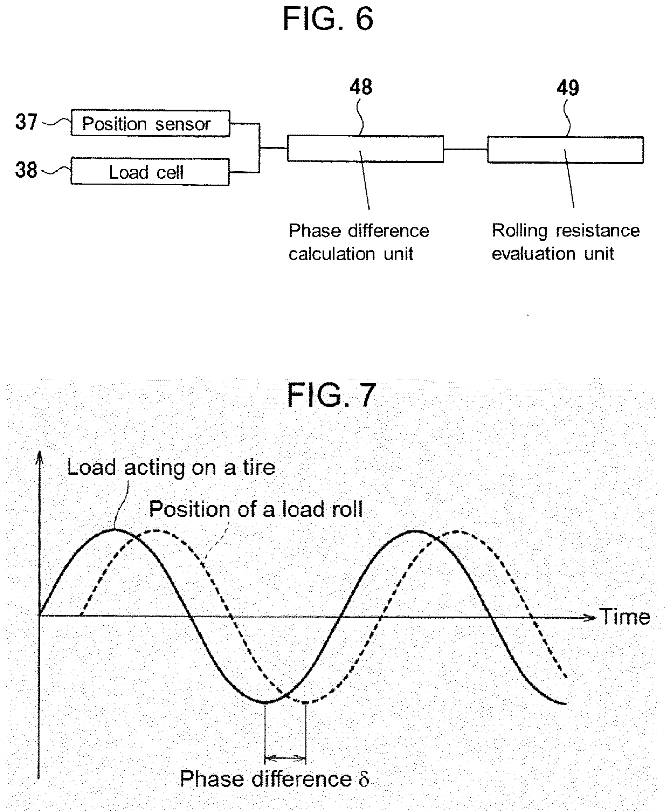

The evaluation device 10 is further equipped with a phase difference calculation unit 48 and a rolling resistance evaluation unit 49. As shown in FIG. 6, the position sensor 37 and the load cells 38 are connected to the phase difference calculation unit 48 and the phase difference calculation unit 48 is connected to the rolling resistance evaluation unit 49. The phase difference calculation unit 48 calculates a phase difference between a load variation and a variation of the surface position of the load roll 44 on the basis of signals from the position sensor 37 and the load cells 38. The rolling resistance evaluation unit 49 evaluates a rolling resistance of the tire 2 as an evaluation target by comparing the phase difference calculated for the tire 2 as the evaluation target by the phase difference calculation unit 48 with a phase difference that was calculated for a reference tire by the phase difference calculation unit 48.

Next, an evaluation method of a rolling resistance of the tire 2 using the evaluation device 10 according to the embodiment is described. A rolling resistance evaluation test is conducted after moving the running drum 4 away from the tire 2 after a tire uniformity test that was performed using the running drum 4.

In the evaluation device 10 according to the invention, the tire 2 is evaluated using a parameter tanδ that represents an attenuation property of a tire rubber. For example, resistance due to energy loss (i.e., hysteresis loss) that is caused by repeated deformation of a tire rubber deformed by a load due to its rotation is a major factor in generation of a tire rolling resistance. This hysteresis loss can be evaluated using tanδ. Parameter δ of tanδ corresponds to a phase difference between stress and deformation generated when a periodic external force is applied to a tire rubber. As the value of tanδ becomes larger, the energy loss due to a bend of a tire increases and, as a result, the rolling resistance increases.

Specifically, δ (i.e., phase difference) of tanδ can be measured by displacing (i.e., exciting) the surface of the aforementioned load roll 44 alternately in a direction in which the surface of the load roll 44 comes closer to the tire 2 and in a direction in which it goes away from the tire 2. More specifically, when the surface of the load roll 44 is displaced alternately in these directions, a variation of the load acting on the tire 2 is observed a little in advance of a variation of the surface position of the load roll 44. The tangent of a phase deviation between these variations calculated by comparing these variations corresponds to the aforementioned tanδ. In the evaluation device 10 according to the embodiment, the rolling resistance of the tire 2 is evaluated on the basis of whether a value of tanδ calculated in this manner is larger than a predetermined threshold value.

In evaluating the rolling resistance of the tire 2 with the evaluation device 10, exciting force is applied to the tire 2 by causing the load roll 44 pressed against the tire 2 to rotate with the rotation of the tire 2 and the load acting on the tire 2 is caused to fluctuate.

Specifically, when the aforementioned phase of the load roll 44 is 0° (see FIG. 5A), the surface portion, having the longest radius L1, of the load roll 44 is pressed against the tire 2 and hence the load acting on the tire 2 is largest. As the load roll 44 is rotated counterclockwise in the figures, the phase of the load roll 44 becomes 90° (see FIG. 5B) and then 180° (see FIG. 5C). During the rotation, the force pressing the surface of the load roll 44 against the tier 2 decreases continuously and the load acting on the tire 2 also decreases continuously. When the phase of the load roll 44 becomes equal to 180°, the portion, having the shortest radius L2, of the load roll 44 is pressed against the tire 2 and hence the load acting on the tire 2 is smallest.

As the load roll 44 is rotated counterclockwise in the figures from the state of FIG. 5C, the phase of the load roll 44 becomes 270° (see FIG. 5D) and then returns to 0° (see FIG. 5A). During the rotation, the force pressing the surface of the load roll 44 against the tire 2 increases continuously and the load acting on the tire 2 also increases continuously. When the phase of the load roll 44 returns to 0°, the portion, having the longest radius L1, of the load roll 44 is pressed against the tire 2 and hence the load acting on the tire 2 is largest.

While the load roll 44 is rotating following the tire 2, a variation of the surface position of the load roll 44 is measured by the position sensor 37 and a variation of the load is measured by the load cells 38. In this way, the temporal variation of the position of the load roll 44 and the variation of the load are measured, and then curves as shown in FIG. 7 are obtained by extracting only excitation frequency components with a filter or the like and plotting them.

As shown in FIG. 7, because of the attenuation property of the tire rubber, the variation curve of the load is recorded so as to lead, by a phase difference δ, the variation curve of the surface position of the load roll 44 in the direction of the pressing force acting on the tire 2. Thus, the phase difference calculation unit 48 calculates a phase difference δ in the horizontal direction between the variation curve of the position of the load roll 44 and the variation curve of the load. Typically, in many cases, a phase difference between these signal waveforms is calculated by determining a transfer function by an FFT analysis.

A value of tanδ is calculated from the phase difference δ thus calculated, and a rolling resistance of the tire 2 is evaluated on the basis of whether the calculated tanδ exceeds a predetermined threshold value. More specifically, first, a phase difference δ is measured for a reference tire that has no abnormality in properties. Subsequently, a phase difference δ of a tire as an evaluation target is measured. If the difference from the value of the phase difference δ of the reference tire is larger than an allowable range, in other words, if the phase difference δ is larger than the prescribed threshold value, it can be judged that the rolling resistance of the tire is larger than a standard value. Thus, if the phase difference δ is larger than the prescribed threshold value, the rolling resistance evaluation unit 49 judges that the tested tire is abnormal in rolling resistance and eliminates the tested tire if necessary.

If a calculated tanδ value is smaller than or equal to the predetermined threshold value (in other words, tanδ is within a prescribed range determined from the value of the phase difference δ of the reference tire), the rolling resistance evaluation unit 49 judges that the tire as an evaluation target has a normal rolling resistance and the tire is handled as one that satisfies product standards.

The use of the aforementioned evaluation device 10 makes it possible to determine tanδ, which is highly correlated with a rolling resistance of a tire, and to evaluate the rolling resistance of the tire easily on the basis of the determined tanδ. This makes it possible to sort out tires that are abnormal in rolling resistance accurately in short time and hence to inspect rolling resistance values of all of numerous tire products manufactured.

### [Features of device for evaluating rolling resistance according to embodiment]

The evaluation device 10 according to the embodiment has the following features.

In the evaluation device 10 according to the embodiment, the load roll 44 is an eccentric roll in which the rotation axis C2 is eccentric. When the load roll 44 is pressed against the tire 2 with a prescribed load, the load roll 44 is fixed in position and rotated with the rotation of the tire 2. By thus causing the load roll 44 to rotate with the rotation of the tire 2, exciting force is applied to the tire 2 without further exciting the load roll 44 after pressing the load roll 44 against the tire 2, and a rolling resistance of the tire 2 can be evaluated.

In the evaluation device 10 according to the embodiment, the largest dimension L1 of the distance between the surface and the rotation axis C2 of the load roll 44 is smaller than half (L4) of the outer diameter of the tire 2, which means that the load roll 44 is smaller than the tire 2. This makes it possible to reduce fatigue damage of members constituting the load roll 44 and vibration of the entire device 10.

The embodiment of the invention is described above with reference to the drawings, it should be noted that specific configurations are possible that are different from the embodiment. The scope of the invention is determined by not only the aforementioned embodiment but also the claims and includes all modifications made within the confines of the claims and their equivalents.

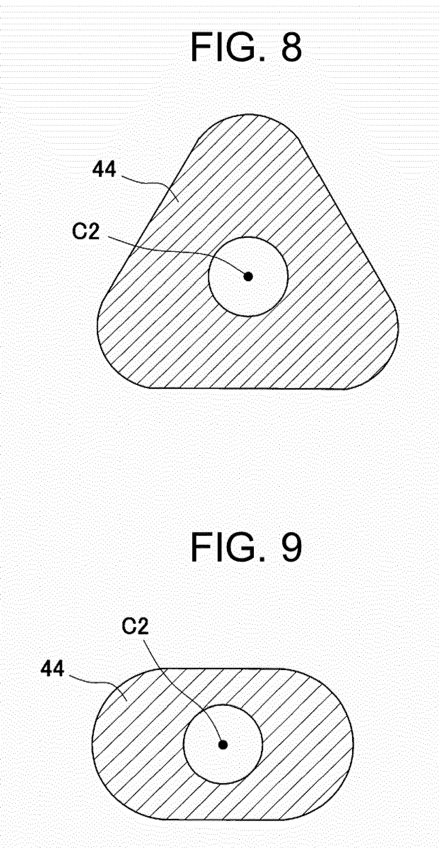

Although in the first embodiment the load roll 44 is an eccentric roll whose rotation axis is eccentric, the invention is not limited to this case. For example, as shown in FIG. 8, the same advantages can be obtained when the load roll 44 is a polygonal roll having a triangular external shape in cross section. The shape of the polygonal roll is not limited to a triangle and may be a square or a pentagon. As a further alternative, as shown in FIG. 9, the same advantages can be obtained when the load roll 44 is an elliptical roll whose external shape is an elongated circle in cross section. The term "elongated circle" includes an ellipse.

Although in the first embodiment the ball screw 14 and the servo motor 17 are used to constitute the mechanism for pressing the load roll 44 against the tire 2, a hydraulic cylinder or an air cylinder may be used in place of them.

Although in the first embodiment the evaluation device 10 is applied to the tire uniformity tester 1, it can also be applied to other kinds of tire testing machine such as a tire balancer and a running test machine. Furthermore, the evaluation device 10 according to the invention can be applied to various tires 2 having different outer diameters.

In the first embodiment, the load cells are used as load sensors for measuring a load acting on the tire 2 when the load roll 44 is pressed against the tire 2. However, strain gauges attached to top and bottom end portions of the roll shaft 41 may be used as the load sensors in place of the load cells.

In the first embodiment, the single load roll 44 having a cylindrical cross section is used. However, the invention is not limited to this case. Two load rolls 52 each having a cylindrical cross section may be used. This configuration is described as a device for evaluating rolling resistance according to a second embodiment.

### <Embodiment 2>

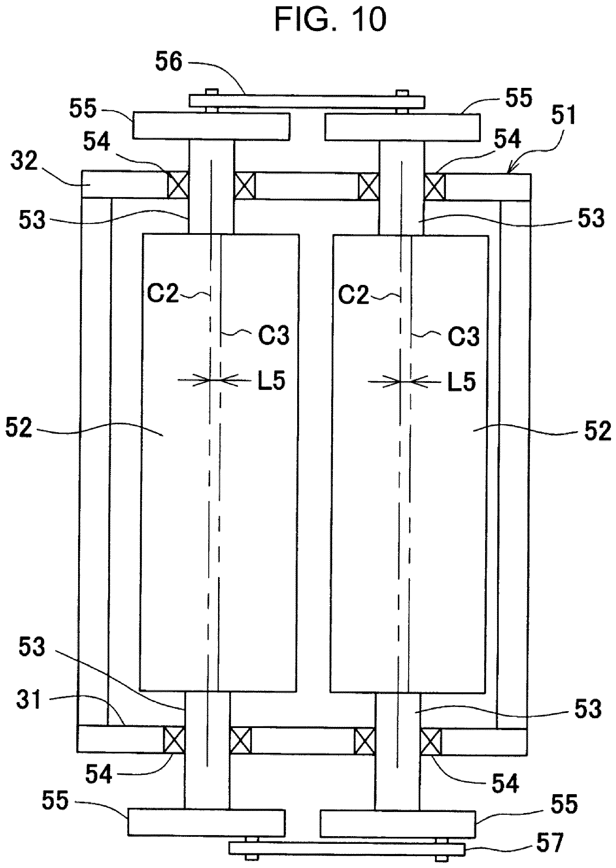

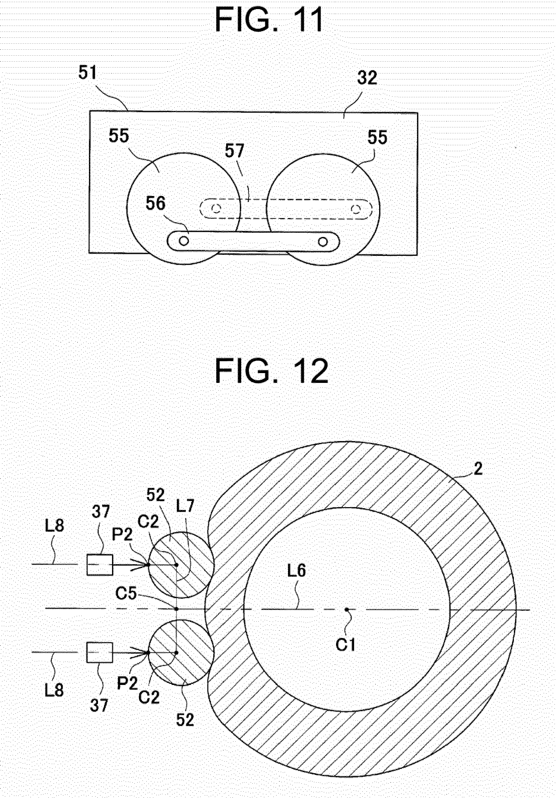

As mentioned above, an evaluation device according to the second embodiment shown in FIG. 10 and FIG. 11 is equipped with two load rolls 52 each having a cylindrical cross section. The load rolls 52 disposed side by side are provided so as to be integrated with respective roll shafts 53 and are supported rotatably by a bottom wall 31 and a top wall 32 of a housing 51 via bearings 54. The load rolls 52 are rotated at the same phase because two disc members 55 that are attached to top end portions of the roll shafts 53 and rotate together with the load rolls 52 are connected to each other by a link member 56. Likewise, two disc members 55 that are attached to bottom end portions of the roll shafts 53 and rotate together with the load rolls 52 are connected to each other by a link member 57. Since the bottom-end link member 57 is deviated in phase from the top-end link member 56 by 90°, the two load rolls 52 can rotate smoothly. The rotation axis C2 of each load roll 52 is deviated from the true center axis C3 by a dimension L5.

FIG. 12 is a plan sectional view showing a relationship between the load rolls 52 and the tire 2 in a state where the load rolls 52 are pressed against a tire 2. Position sensors 37 detect surface positions P2 of the load rolls 52 along lines L8 that are parallel with a line L6 that connects the center C1 of the tire 2 and the center C5 of a line L7 that connects the rotation axes C2 of the two load rolls 52. The surface positions P2 of the load rolls 52 are points where the lines L8 intersect the surfaces of the load rolls 52 on the side opposite to the tire 2. Variation amounts of the surface positions P2 of the load rolls 52 with respect to prescribed reference points continue to be detected as the load rolls 52 are rotated, and are regarded as a deformation amount of the tire 2. The surface positions of the load rolls 52 to be detected by the respective position sensors 37 are not limited to the surface positions P2, and may be any positions on the surfaces of the load rolls 52. Although in the embodiment surface positions of the two load rolls 52 are detected by the two respective position sensors 37, it is possible to dispose only one position sensor 37 and detect a surface position of only one of the load rolls 52. Since the other parts of the configuration are the same as in the first embodiment, the same reference symbols are assigned to the same elements as employed in the first embodiment and the description thereof is omitted.

By disposing the two load rolls 52 side by side, the contact state of the tire 2 can be made closer to its actual ground contact state and the curvature of deformation of the tire 2 can be made smaller. Furthermore, the same load can be applied to the tire 2 by rotating the two load rolls 52 at the same phase.

### <Embodiment 3>

Although in the first embodiment the evaluation device 10 is separate from the tire uniformity tester 1 and is attached to the tire uniformity tester 1, the invention is not limited to this case. An evaluation device (including load roll 44) according to a third embodiment is provided so as to be integrated with a tire uniformity tester 1.

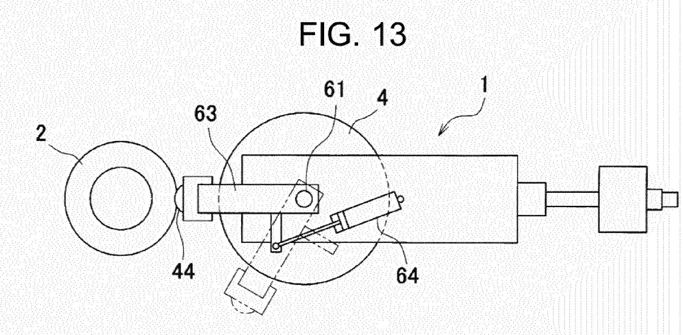

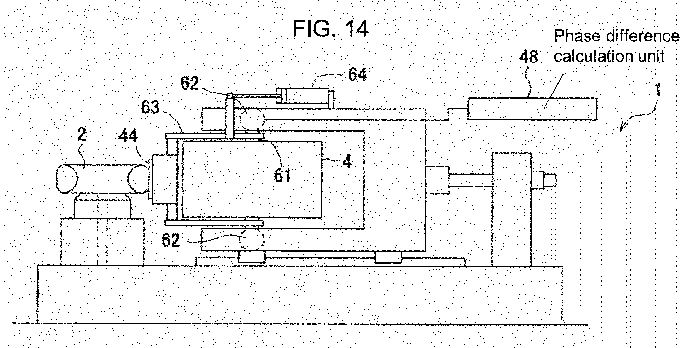

As shown in FIG. 13 and FIG. 14, the tire uniformity tester 1 is equipped with a running drum 4 configured to be rotated in contact with a tire 2 and test the uniformity of the tire, a drum shaft 61 for holding the running drum 4 rotatably, load cells 62 supporting top and bottom end portions of the drum shaft 61, and a fixing member 63 supporting a load roll 44. The fixing member 63 is a frame body that extends in the radial direction of the running drum 4 and is U-shaped in cross section, and is attached rotatably to the bottom end portions of the drum shaft 61. The load roll 44 is attached to the tire 2 side of the fixing member 63, and is rotated between a position where it comes close to and is then pressed against the tire 2 and a position where it goes away from the tire 2 by expanding and contracting a cylinder 64.

In the evaluation device according to the third embodiment, signals from the load cells 62 are input to a phase difference calculation unit 48 so that the load cells 62 are used as load sensors for the load roll 44. Thus, in adding a function of evaluating the rolling resistance of the tire 2 to the tire uniformity tester 1, a variable load acting on the tire 2 can be measured without newly providing load sensors. Furthermore, a motive power source for the running drum 4 of the tire uniformity tester 1 can be used in pressing the load roll 44 against the tire 2 with a prescribed load. Still further, since the position of the running drum 4 of the tire uniformity tester 1 is fixed when it is pressed against the tire 2, it is not necessary to newly provide a mechanism for fixing the position of the load roll 44.

The present application is based on Japanese Patent Application No. 2016-183372 filed on September 20, 2016, the disclosure of which is incorporated herein by reference.

### Description of Symbols

1: Tire uniformity tester
2: Tire
4: Running drum
10: Device for evaluating rolling resistance
37: Position sensor
38: Load cell (load sensor)
44: Load roll
48: Phase difference calculation unit
49: Rolling resistance evaluation unit
52: Load roll
61: Drum shaft
62: Load cell
63: Fixing member

## Claims

1. A device for evaluating tire rolling resistance, the device comprising:
a load roll having a surface that simulates a road surface on which a tire is to travel;
a load sensor configured to detect a load acting on the tire in a state where the surface of the load roll is in contact with the tire;
a position sensor configured to detect a position of the surface of the load roll;
a phase difference calculation unit configured to calculate a phase difference between a variation of the load and a variation of the position of the surface of the load roll on the basis of signals from the load sensor and the position sensor; and
a rolling resistance evaluation unit configured to evaluate a rolling resistance of the tire as an evaluation target by comparing the phase difference calculated for the tire as the evaluation target by the phase difference calculation unit with the phase difference calculated for a reference tire by the phase difference calculation unit,
wherein the load roll is an eccentric roll whose rotation axis is eccentric, a polygonal roll having a polygonal shape in cross section, or an elongated circle roll having an elongated circle shape in cross section, and
wherein the load roll is configured to be pressed against the tire with a prescribed load, fixed in position, and rotated with the rotation of the tire.

2. The device for evaluating tire rolling resistance according to Claim 1, wherein the largest dimension of the distance between the rotation axis and the surface of the load roll is smaller than half of the outer diameter of the tire.

3. The device for evaluating tire rolling resistance according to Claim 1,
wherein the load roll is attached to a drum shaft, supported by a load cell, of a running drum of a tire uniformity tester via a fixing member capable of moving around the drum shaft, and
wherein a signal from the load cell is input to the phase difference calculation unit so that the load cell is used as the load sensor.

4. The device for evaluating tire rolling resistance according to Claim 2,
wherein the load roll is attached to a drum shaft, supported by a load cell, of a running drum of a tire uniformity tester via a fixing member capable of moving around the drum shaft, and
wherein a signal from the load cell is input to the phase difference calculation unit so that the load cell is used as the load sensor.

5. The device for evaluating tire rolling resistance according to any one of Claims 1 to 4, wherein two of the load rolls are disposed side by side and configured to rotate at the same phase.
